Europäisches Patentamt

European Patent Office

Office européen des brevets

(11) Veröffentlichungsnummer: **0 320 709**

**A1**

# (12) EUROPÄISCHE PATENTANMELDUNG

(21) Anmeldenummer: 88120106.5

(22) Anmeldetag: 02.12.88

(51) Int. Cl.4: **B01D 57/02 , G01N 27/26**

(30) Priorität: 14.12.87 DE 3742292

(43) Veröffentlichungstag der Anmeldung:
21.06.89 Patentblatt 89/25

(84) Benannte Vertragsstaaten:
**AT CH DE FR GB IT LI**

(71) Anmelder: **Stichlmair, Johann, Prof.Dr.
Graf-Spee-Strasse 11
D-4300 Essen 1(DE)**

(72) Erfinder: **Der Erfinder hat auf seine Nennung
verzichtet**

(74) Vertreter: **Dipl.-Ing. H. Marsch Dipl.-Ing. K.
Sparing Dipl.-Phys.Dr. W.H. Röhl
Patentanwälte
Rethelstrasse 123 Postfach 14 02 68
D-4000 Düsseldorf(DE)**

(54) **Verfahren und Vorrichtung zur Stofftrennung mittels Elektrophorese.**

(57) Die Erfindung betrifft ein Verfahren und eine Vorrichtung zur Zweiphasen-Elektrophorese, bei der sich in einem Trennraum mindestens zwei miteinander nicht vollständig mischbare Flüssigkeiten (2, 3) befinden. Anode und Kathode (5, 6) sind in unterschiedlichen Flüssigkeiten angeordnet, so daß der Stofftransport unter der Wirkung des elektrischen Feldes über die Phasengrenze (4) erfolgt. Die aufnehmende Flüssigkeit hat dabei die Aufgabe, die wandernden Teilchen (Moleküle o.dgl.) einzufangen und eine Rückwanderung in die abgebende Flüssigkeit zu verhindern. Die Trennung läßt sich in unterschiedlicher Weise durchführen, diskontinuierlich, halbkontinuierlich oder kontinuierlich mit Gleich- bzw. Gegenstromführung der Flüssigkeiten. Auch eine chromatographieartige Trennung kann durchgeführt werden.

Fig.1

EP 0 320 709 A1

## Verfahren und Vorrichtung zur Stofftrennung mittels Elektrophorese

Die Erfindung betrifft ein Verfahren und eine Vorrichtung zur Stofftrennung mittels Elektrophorese, bei welchen in wenigstens einer Trennkammer mit wenigstens zwei in einer Flüssigkeit befindlichen Elektroden durch Anlegen einer elektrischen Gleichspannung ein Stofftransport in Form einer Wanderung von in der Flüssigkeit befindlichen geladenen Molekülen bzw. Teilchen in dem zwischen den Elektroden erzeugten elektrischen Feld bewirkt wird.

Als Elektrophorese wird die Wanderung von Molekülen oder Teilchen unter der Wirkung eines elektrischen Feldes bezeichnet. In der technischen Ausführung wird durch Anlegen einer elektrischen Spannung zwischen Kathode und Anode, welche sich in einer Flüssigkeit befinden, ein elektrisches Feld erzeugt, so daß elektrisch geladene Moleküle oder Teilchen in der Flüssigkeit wandern. In Abhängigkeit von der jeweiligen Wanderungsgeschwindigkeit und Wanderungsrichtung unterschiedlicher Spezies kann so eine Abtrennung einzelner Substanzen aus einem Gemisch erreicht werden.

Bei der sogenannten "Trägerfreien Elektrophorese" durchströmt eine Pufferlösung eine Trennkammer quer zu den Kraftlinien eines elektrischen Feldes, das von zwei Elektroden erzeugt wird. Ein zu zerlegendes Flüssigkeitsgemisch wird möglichst punktförmig in die Trennkammer eingeleitet. Substanzen mit unterschiedlicher elektrophoretischer Beweglichkeit werden in unterschiedlichem Ausmaß in Richtung der Kraftlinien des elektrischen Feldes abgelenkt und können am Ende des Trennraumes an verschiedenen Stellen abgezogen werden.

Eine grundlegende Voraussetzung für die effektive Durchführung einer Stofftrennung mittels Elektrophorese ist, daß innerhalb der Trennkammer keinerlei Vermischungsvorgänge stattfinden. Die Pufferlösung sollte also möglichst unbewegt sein oder zumindest vollkommen laminar, d.h. ohne turbulente Quervermischungen die Kammer durchströmen. Dieser Forderung stehen folgende Schwierigkeiten entgegen:

- Aufgrund des hohen Stromflusses zwischen den Elektroden kommt es zu einer starken Erwärmung der Flüssigkeit. Dabei bilden sich in der Kammer lokale Temperaturunterschiede aus, die wegen der damit verbundenen Dichteänderung freie Konvektionsströme auslösen. Diese thermische Konvektion ist sehr viel stärker als die elektrophoretische Bewegung, so daß sie die Trennung entscheidend behindern und unter Umständen gänzlich zunichte machen kann.

- Bei der Strömung der Pufferlösung durch die Trennkammer sind (wie bei jeder Strömung) Turbulenzen fast unvermeidlich. Lediglich bei sehr kleinen Strömungsquerschnitten kann man sich dem laminaren Strömungszustand in etwa nähern. Aber auch hierbei kommt es am Kammereinlaß und in besonderem Maße am Kammerauslaß zu turbulenten Vermischungen, wodurch das Trennergebnis entscheidend verschlechtert wird.

- Durch Elektrolyse des Wassers, die der Elektrophorese stets überlagert ist, kommt es an den Elektroden zur Gasbildung. Die dabei gebildeten Gasblasen stören den laminaren Strömungszustand in ganz erheblichem Maße und können zu nennenswerten Vermischungen innerhalb der Flüssigkeit führen.

Eine weitere wesentliche Schwierigkeit der Elektrophorese besteht darin, daß sehr hohe Spannungen (etwa 2500 Volt und mehr) verwendet werden müssen. Da die Stofftrennung auf unterschiedlichen Wanderungsgeschwindigkeiten zwischen den Elektroden basiert, müssen Kathode und Anode in einem relativ großen Abstand (etwa 30 cm und mehr) voneinander angeordnet werden, um eine ausreichende Trennschärfe zu erzielen. Dadurch bildet die Flüssigkeit einen sehr großen Widerstand für den Stromfluß, der nur durch die Verwendung hoher Spannungen überwunden werden kann.

Bisher wurde eine Reihe unterschiedlicher Maßnahmen ergriffen, um die Hauptschwierigkeit der Elektrophorese, die Ausbildung von thermischen Konvektionsströmen, zu überwinden.

Eine effektive Maßnahme besteht darin, die Pufferlösung in einem Trägermedium zu fixieren. Zur Anwendung kommen vor allem poröse Schüttungen aus sehr feinen Partikeln, Papier oder Gele (Bier, M.: Elektrophoresis: Theory, Methods and Applications, Academic Press Inc., London 1973). Die Verwendung der festen Trägerstoffe führt jedoch dazu, daß das Trennverfahren nur diskontinuierlich in chromatographieartiger Weise durchgeführt werden kann. Dadurch ist die Anwendbarkeit dieser sogenannten "Träger-Elektrophorese" auf Analysenzwecke begrenzt.

Bei der "Trägerfreien Elektrophorese" lassen sich die thermischen Konvektionsströme durch intensives Kühlen über die Wände der Trennkammer vermindern. In hinreichendem Maße gelingt dies jedoch nur, wenn der Abstand der Deckplatten deutlich geringer als 1mm ist (Hanning, K.: Habilitationsschrift, Ludwig-Maximilians-Universität, München 1964). Folglich eignet sich dieses Trennverfahren, das vorwiegend kontinuierlich betrieben wird, nur für sehr kleine Mengenströme.

Am effektivsten gelingt die Ausschaltung der thermischen Konvektion im schwerelosen Raum. Bei mehreren Weltraumflügen (z.B. von Apollo 14 im Jahre 1971 bis Spacelab D1 im Jahre 1985) wurden Experimente zur Elektrophorese durchgeführt, wobei Leistungssteigerungen bis zum Faktor 700 erzielt werden konnten (Jordan, H.L.: Weltraumforschung, DFVLR, Köln-Porz 1984).

Aufgabe der Erfindung ist es daher, eine Stofftrennung durch Elektrophorese der eingangs genannten Art zu ermöglichen, die durch Vermischungsvorgänge in der Trennkammer nicht nachteilig beeinflußt wird und bei niedrigen Gleichspannungen zur Erzeugung des elektrischen Feldes vorgenommen werden kann.

Diese Aufgabe wird dadurch gelöst, daß wenigstens zwei Flüssigkeiten, die nicht vollständig miteinander mischbar sind, eingesetzt werden und die sich dadurch ausbildende Phasengrenze(n) zwischen den Elektroden gehalten wird, so daß der Stofftransport unter der Wirkung des elektrischen Feldes über mindestens eine Phasengrenze erfolgt.

Hierbei befinden sich im Trennraum zwischen den Elektroden zwei oder mehr miteinander nicht mischbare Flüssigkeiten, wobei Kathode und Anode in unterschiedlichen Phasen angeordnet sind. Bei dieser Anordnung wandern die elektrophoretisch beweglichen Moleküle oder Teilchen (Kolloide, Bakterien, Zellen o.dgl.) über die Phasengrenze entsprechend ihrer elektrophoretischen Wanderungsrichtung in die andere Phase, während die anderen in der ursprünglichen Phase verbleiben. Auf diese Weise können Substanzen, die eine hinreichende elektrophoretische Beweglichkeit besitzen, aus einem vorgegebenen Flüssigkeitsgemisch abgetrennt werden.

Hierbei hat die zweite flüssige Phase die Aufgabe, die Moleküle oder Teilchen mit der hohen Wanderungsgeschwindigkeit einzufangen und eine Rückwanderung in die ursprüngliche Phase zu verhindern. Da die makroskopischen Strömungen, die durch die frei werdende Wärme oder durch Strömungsturbulenzen erzeugt werden, jeweils nur innerhalb einer einzelnen Phase wirken, sind sie für die elektrophoretische Trennung nicht mehr von Nachteil und brauchen daher nicht mehr unterdrückt zu werden. Sie können das Trennergebnis sogar positiv beeinflussen, da durch sie die übergehenden Substanzen in die Nähe der Phasengrenze transportiert werden und so einer Verarmung dieser Substanzen in dieser Zone entgegengewirkt wird. Das elektrische Feld hat lediglich die Aufgabe, den Phasenübergang der elektrophoretisch beweglichen Teilchen zu bewirken.

Kathode und Anode können in sehr geringem Abstand voneinander angeordnet werden. Es muß lediglich sichergestellt sein, daß sich die Phasengrenze dazwischen befindet. Auf diese Weise kann das Trennverfahren mit sehr viel kleineren Spannungen (z.B. 50 Volt oder weniger) als bei der bekannten Elektrophorese durchgeführt werden.

Weitere Ausgestaltungen der Erfindung sind der nachfolgenden Beschreibung und den Unteransprüchen zu entnehmen.

In umfangreichen Versuchen wurde die Wirksamkeit der Zweiphasen-Elektrophorese getestet. Bei diesen Untersuchungen wurden zunächst zwei miteinander nicht mischbare wäßrige Flüssigkeiten eingesetzt. Es handelte sich um die Systeme Wasser-Dextran und Wasser-Polyäthylenglykol, wobei der Wassergehalt jeder Phase bei über 80 Gew.-% lag. Eine der beiden Phasen wurde mit einem Farbstoff, der eine hohe elektrophoretische Beweglichkeit besitzt, eingefärbt. Zur Anwendung kamen z.B. Säurefuchsin und Kresolrot.

Nach Anlegen der elektrischen Spannung konnte die Entfärbung der stoffabgebenden Phase und die Einfärbung der stoffaufnehmenden Phase visuell verfolgt werden. Die Untersuchungen demonstrierten sehr deutlich, daß das Überschreiten der Phasengrenze unter der Wirkung des elektrischen Feldes ohne weiteres möglich ist. Die Ausbildung einer Hemmung im Bereich der Phasengrenze wurde nicht beobachtet. Der elektrophoretische Stofftransport über die Phasengrenze ist nach den gemachten Beobachtungen sehr viel intensiver als der Transport aufgrund des Extraktionsgleichgewichtes zwischen den beteiligten Phasen. Dies bedeutet, daß in der aufnehmenden Phase eine sehr hohe Aufkonzentrierung der übergehenden Substanzen erfolgen kann.

In weiteren Untersuchungen wurde eine wäßrige und eine organische Phase (n-Butanol) verwendet. Der Phasenübergang des Farbstoffes war auch hier ohne weiteres möglich. Durch einfaches Umpolen der Elektroden konnte die Richtung des Stoffüberganges umgekehrt werden. Dabei zeigte sich, daß der Stofftransport aus der organischen Phase in die wäßrige wesentlich schneller erfolgt als in die entgegengesetzte Richtung.

Die Erfindung wird nachstehend anhand der in den beigefügten Abbildungen dargestellten Ausführungsbeispiele näher erläutert.

Fig. 1 zeigt schematisch eine Ausführungsform einer Trennzelle zur Durchführung des erfindungsgemäßen Verfahrens.

Fig. 2 bis 5 zeigen jeweils schematisch weitere Ausführungsformen von Trennzellen.

Fig. 6 zeigt eine zweckmäßige Elektrodenausbildung und -anordnung.

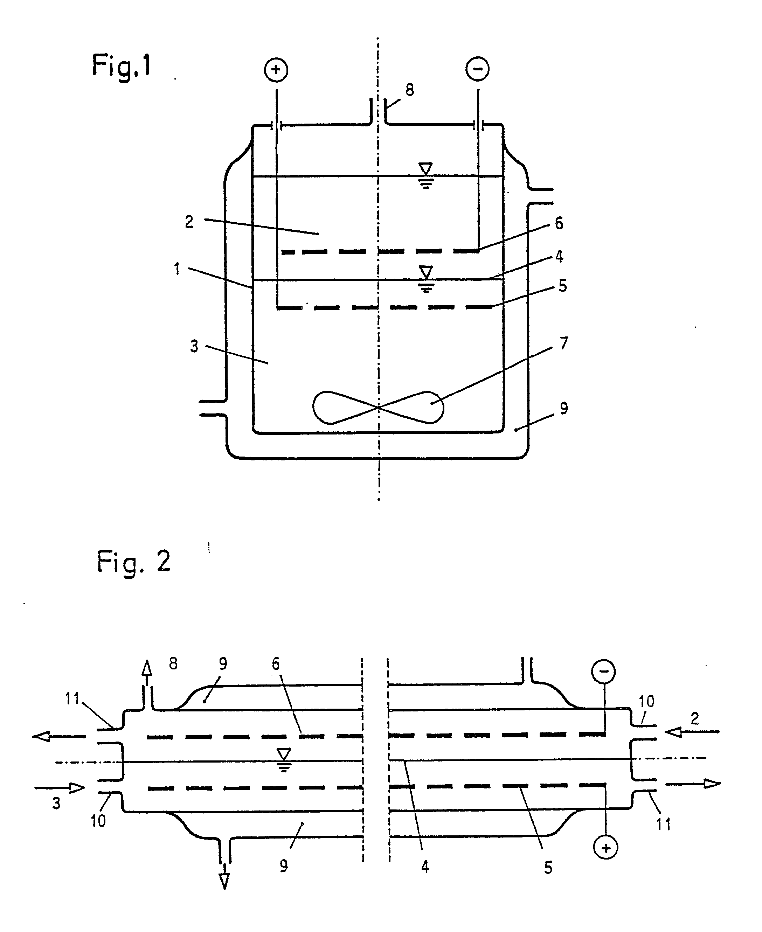

Die in Fig. 1 dargestellte Trennzelle 1 nimmt zwei nicht vollständig miteinander mischbare Flüssigkeiten 2, 3 auf, so daß sich zwischen diesen eine Phasengrenze 4 ausbildet. In der Trennzelle 1 sind zwei möglichst chemisch neutrale Elektroden 5 und 6 angeordnet. Die Phasengrenze 4 befindet sich zwischen den Elektroden 5, 6, die netzartig ausgebildet sind, so daß sie von Flüssigkeit und Gas aus der auftretenden Elektrolyse ungehindert durchströmt werden können. Die beiden Elektroden 5, 6 sind in relativ geringem Abstand zueinander, vorzugsweise 5 bis 20 mm, und praktisch parallel zur Phasengrenze 4 angeordnet und mit einer nicht dargestellten Gleichstromquelle verbunden.

Der Elektrodenabstand wird zweckmäßigerweise so klein wie möglich gewählt, damit man mit möglichst geringen Spannungen arbeiten kann. Es muß lediglich sichergestellt werden, daß sich die Phasengrenze 4 zwischen den Elektroden 5, 6 befindet.

Um einer Verarmung der übergehenden Substanzen in der Nähe der Phasengrenze entgegenzuwirken, kann eine (oder beide) Phase(n) durch ein Rührorgan 7 innig vermischt werden. Sich während der Elektrophorese bildende Elektrolysegase werden durch einen Auslaß 8 ausgeleitet. Ein Kühlmantel 9, der von einem Kühlmittel durchströmt wird, dient der Begrenzung des Temperaturanstiegs. Hierbei kann entweder die leichte oder die schwere Phase die stoffaufnehmende Phase sein. Diese Trennzelle bietet sich an, wenn aus kleinen Flüssigkeitsmengen die Substanzen mit der gleichen elektrophoretischen Wanderungsrichtung abgetrennt werden sollen.

Fig. 2 zeigt eine langgestreckte Trennzelle 1, bei der beide Flüssigkeiten 2, 3 über entsprechende Ein- bzw. Auslässe 10, 11 kontinuierlich zu- und abgeführt werden. Hierbei ist neben der dargestellten Gegenstromführung auch eine Gleichstromführung der beteiligten Phasen möglich. Dies ist vorteilhaft, wenn aus einer größeren Flüssigkeitsmenge Substanzen mit einheitlicher elektrophoretischer Wanderungsrichtung abgetrennt werden sollen.

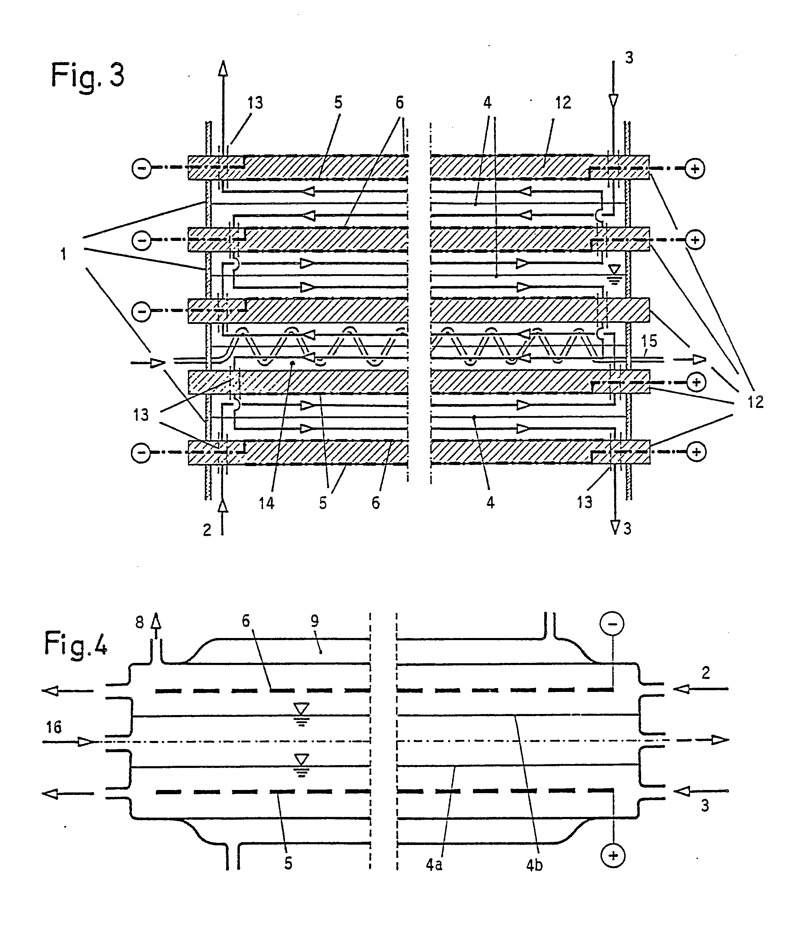

Fig. 3 zeigt eine aus mehreren, in modulartiger Bauweise übereinander angeordnete Trennkammern 1 bestehende Vorrichtung für kontinuierlichen Gegenstrombetrieb. Die leichte Flüssigkeit 2 durchströmt die Vorrichtung von unten nach oben, die schwere Flüssigkeit 3 bewegt sich im Gegenstrom hierzu nach unten. Die einzelnen Trennkammern 1 sind durch horizontale Trennplatten 12 aus elektrisch nicht leitendem Material voneinander getrennt, die ober- und unterseitig jeweils eine Elektrode 5 und 6, d.h. eine Anode 5 und eine Kathode 6 (strichpunktiert dargestellt), - gegebenenfalls mit Abstand - tragen und über die die Verbindung der Elektroden 5, 6 mit der Gleichspannungsquelle erfolgt. In den Trennplatten 12 befinden sich Durchführungen 13 für die beiden Flüssigkeiten in Form von Schächten, deren Höhe so bemessen ist, daß durch sie die Lage der Phasengrenze 4 in der Mitte zwischen den beiden jeweiligen Elektroden 5 und 6 gehalten wird. Zwischen den Trennkammern 1 können, um Temperaturschwankungen zu vermeiden, Kammern 14 mit Kühlelementen 15 (kühlmitteldurchströmte Kühlschlangen) vorgesehen werden. Letztere können auch in den Trennkammern 1 vorgesehen sein oder die Trennplatten 12 selbst können kühlmitteldurchströmt sein.

Fig. 4 zeigt eine langgestreckte Trennkammer 1, bei der drei Flüssigkeiten 2, 3 und 16 verwendet werden, so daß sich zwei Phasengrenzen 4a und 4b ausbilden, die sich beide zwischen den Elektroden 5 und 6 befinden. Unter der Wirkung des elektrischen Feldes wandern Substanzen mit unterschiedlicher Richtung der elektrophoretischen Beweglichkeit in verschiedene Phasen. Auf diese Weise können z.B. aus der mittleren Phase 6 alle Substanzen, die eine merkliche elektrophoretische Beweglichkeit besitzen, abgetrennt werden.

Es können auch eine (Fig.3) oder zwei (Fig. 4) Flüssigkeiten stationär in der Vorrichtung verbleiben. Im Laufe der Betriebszeit reichern sich die übergehenden Substanzen in diesen stationären Phasen an; sie werden dort also in hohem Maße aufkonzentriert. Eine eventuell erforderliche Regeneration der stationären Phasen läßt sich durch einfaches Umpolen der Elektroden bewerkstelligen. Dabei werden die aufkonzentrierten Stoffe kurzzeitig mit hoher Konzentration von der stetig strömenden Phase ausgeschleppt.

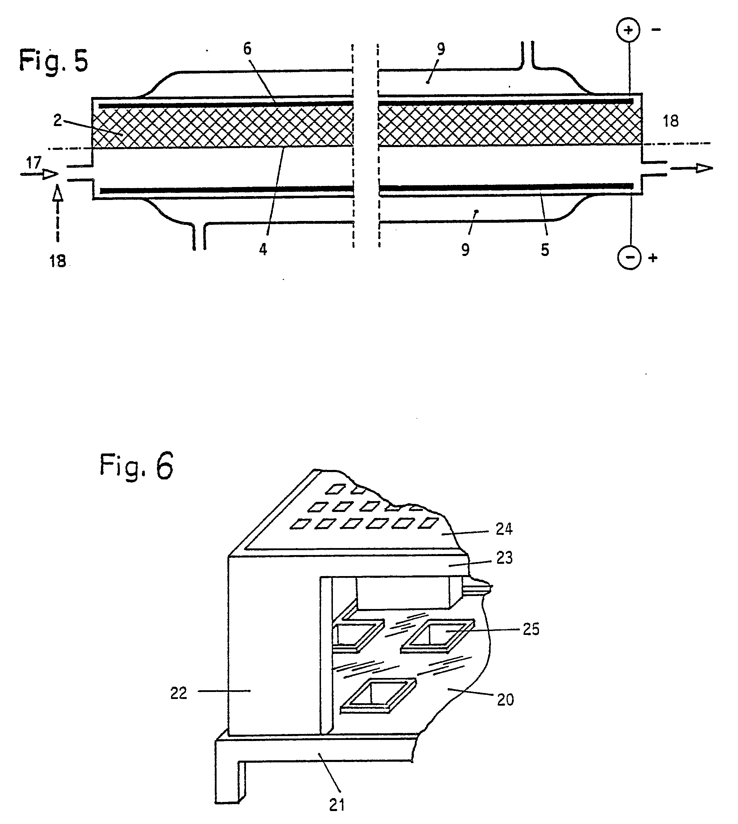

Fig. 5 zeigt eine langgestreckte Trennzelle 1 in Analogie zur Gegenstromverteilung (Craig-Verteilung), wie sie bei der Solventextraktion durchgeführt wird. Hierbei durchströmt eine Pufferlösung 17 stetig die Trennzelle 1, während die zweite Phase 2 stationär, z.B. in einem porösen Körper 18, vorliegt. Die zu zerlegende Probe 19 wird kurzzeitig der stetig strömenden Phase 17 zugegeben. Unter der Wirkung des elektrischen Feldes zwischen den Elektroden 5 und 6 wandern die Substanzen, die eine hohe elektrophoretische Beweglichkeit besitzen, in die stationäre Phase 2 und werden dort festgehalten; sie strömen dann also nicht mehr weiter. Durch Umpolung der Elektroden 5, 6 kehren sie nach einiger Zeit wieder in die stetig strömende Phase 17 zurück. Dieser Vorgang wird auf dem Wege durch die gegebenenfalls aus mehreren derartigen Trennzellen 1 bestehende Vorrichtung mehrfach wiederholt. Diejenigen Substanzen, die keine elektrophoretische Beweglichkeit besitzen, durchströmen die Vorrichtung sehr schnell, da sie nie von der stationären Phase festgehalten werden. Die anderen Substanzen werden je nach dem Grad ihrer elektrophoretischen Beweglichkeit mehr oder weniger lange in der stationären Phase verweilen; sie erreichen also den Ausgang der Vorrichtung wesentlich später. Auf diese Weise gelingt die vollständige Zerlegung eines Gemisches in Fraktionen von Substanzen mit unterschiedlicher elektrophoretischer Beweglichkeit. Die dabei erzielte Trennung ist der bekannten Gaschromatographie vergleichbar. Im Gegensatz zur Gaschromatographie kann sie auch auf Makromoleküle, auf Kolloide, auf Bakterien und Zellen angewendet werden.

Bei dem erfindungsgemäßen Verfahren kommt der Wahl der zweiten flüssigen Phase eine besondere Bedeutung zu. Sie soll in der Regel teilweise mit Wasser mischbar sein und eine hinreichende elektrische Leitfähigkeit besitzen. Bevorzugt wird als zweite flüssige Phase eine solche mit einem möglichst hohen Wassergehalt. Sie soll eine möglichst geringe Löslichkeit in der wässrigen Phase aufweisen, eine hinreichende Dichtedifferenz, eine gute Löslichkeit der übergehenden Substanzen, keine Reaktion oder Denaturierung mit den übergehenden Substanzen und möglichst geringe Viskositätsunterschiede haben. Als leichte Phasen können beispielsweise Gemische von 1-Butanol, 2-Butanol und Polyäthylenglykol mit Wasser und als schwere Phasen Dichlormethan und eine Mischung aus Dichlormethan/Äthanol, Chinolin, 4-Chlor-1-Butanol, Methylphenylketon und Dextran/Wasser verwendet werden. Ferner eignen sich wässrige Lösungen nichtionischer Tenside vom Typ substituierter Polyglykolether (sogenannte Polyethoxylate), die je nach Struktur leichter oder schwerer als Wasser sein können. Insbesondere werden solche verwendet, bei denen die Zahl der Ethylenoxidgruppen pro Molekül zwischen 3 und 20 liegt und der Substituent ein aliphatischer, alkylaromatischer oder ein Fettsäurerest sein kann. Diese werden vorzugsweise in Mischung mit Wasser verwendet, wobei der Wassergehalt im Bereich von 95% liegen kann, können jedoch auch in Mischung mit anderen Flüssigkeiten, wie etwa die vorstehend erwähnten, eingesetzt werden. Die Verwendung dieser Substanzen ermöglicht eine Trennung bei sehr geringen Spannungen von bis zu einigen Volt. Zu beachten ist, daß die Wanderungsgeschwindigkeit vieler Spezies vom pH-Wert des Mediums, in dem sie sich befinden, abhängt. Bei einem bestimmten pH-Wert, dem sogenannten isoelektrischen Punkt, wird die Wanderungsgeschwindigkeit zu Null. Durch Einstellen unterschiedlicher pH-Werte in den beteiligten Phasen lassen sich einzelne Spezies in bestimmten Phasen anreichern. Dies kann zum Beispiel dadurch geschehen, daß die Substanzen zunächst in die zweite Phase übertragen werden und nach Umpolung der Elektroden (sowie eventueller pH-Wertänderung) wieder von der ursprünglichen Phase aufgenommen werden. Diejenigen Substanzen, deren isoelektrischer Punkt dem pH-Wert der zweiten Phase entspricht, verbleiben dabei in dieser Phase. Eine andere Möglichkeit besteht darin, die Substanzen unter der Wirkung des elektrischen Feldes durch mehrere Phasen mit jeweils unterschiedlichem pH-Wert wandern zu lassen, wobei sich Substanzen mit unterschiedlichem isoelektrischen Punkt in der Phase mit dem entsprechenden pH-Wert anreichern.

Wie festgestellt wurde, können unter der Wirkung des elektrischen Feldes die übergehenden Substanzen in der aufnehmenden Phase sehr stark angereichert werden. Dies kann so weit getrieben werden, daß dabei die Löslichkeitsgrenze überschritten wird, so daß es zum Auskristallisieren dieser Substanzen kommt. Auf diese Weise können Stoffe in hochreiner, kristalliner Form aus verdünnten Lösungen abgetrennt werden. Hierbei ist es zweckmäßig, als aufnehmende Phase die schwerere Phase zu verwenden, damit die gebildeten Kristalle in dieser Phase verbleiben.

Bei dem erfindungsgemäßen Verfahren wird angestrebt, daß die beiden Elektroden 2 und 3 möglichst vollkommen parallel zur dazwischenliegenden Phasengrenzfläche 4 angeordnet sind. Dies kann in einfacher Weise z.B. dadurch sichergestellt werden, daß als untere Elektrode 5 eine Quecksilberschicht 20 verwendet wird, die sich aufgrund der Schwerkraft ebenso wie die Phasengrenzfläche 4 völlig horizontal ausbildet. Die über der Phasengrenzfläche 4 befindliche Elektrode 6 kann entweder fest mit dem Gehäuse der Trennkammer 1 verbunden oder mittels nichtleitender Distanzelemente auf der Quecksilberschicht 20 schwimmend eingebaut werden. Hierzu kann ein flacher Trog 21 zur Aufnahme der Quecksilberschicht 20 vorgesehen sein, während ein mit Stützbeinen 22 als Distanzelemente versehener elektrisch nichtleitender Rahmen 23 eine siebartig durchlöcherte elektrisch leitfähige Platte 24 trägt, wobei die Stützbeine 21 auf der Quecksilberschicht 20 schwimmen, so daß die Platte 24 parallel zur Oberfläche der Quecksilberschicht 20 und damit horizontal gehalten wird. Der Trog 21 kann mit Durchbrüchen 25 für den Flüssigkeitsdurchtritt versehen sein (Fig. 6).

Die erfindungsgemäße Durchführung der Elektrophorese eröffnet die Möglichkeit, dieses Trennverfahren zur Zerlegung von Stoffgemischen universeller als bisher anzuwenden. Insbesondere ist die Verarbeitung größerer Stoffmengen im industriellen Maßstab möglich. Ein wichtiges Anwendungsgebiet dürfte im Bereich der Biotechnologie liegen. Grundsätzlich lassen sich Substanzen abtrennen, die dissoziiert, assoziiert oder amphoter auftreten, wie Aminosäuren, Proteine, Abbaupeptide, protein-, nucleinsäure- und kohlehydrathaltige Naturstoffe tierischer und pflanzlicher Herkunft, Enzyme, Zellen, Zellorganellen, organische und anorganische Säuren, pharmazeutische Produkte, und dergleichen, sowie Substanzen, welche als Ionen oder auf andere Weise ladungsbehaftet im Trägermedium vorliegen, wie organische und anorganische Salze, sonstige Metallverbindungen, Mineralien, Radionuklide oder dergleichen.

**Ansprüche**

1. Verfahren zur Stofftrennung mittels Elektrophorese, bei welchem in wenigstens einer Trennkammer mit wenigstens zwei in einer Flüssigkeit befindlichen Elektroden durch Anlegen einer elektrischen Gleichspannung ein Stofftransport in Form einer Wanderung von in der Flüssigkeit befindlichen geladenen Moleküle bzw. Teilchen in dem zwischen den Elektroden erzeugten elektrischen Feld bewirkt wird, **dadurch gekennzeichnet, daß** wenigstens zwei Flüssigkeiten, die nicht vollständig miteinander mischbar sind, eingesetzt werden und die sich dadurch ausbildende Phasengrenze(n) zwischen den Elektroden gehalten wird, so daß der Stofftransport unter der Wirkung des elektrischen Feldes über mindestens eine Phasengrenze erfolgt.

2. Verfahren nach Anspruch 1, dadurch gekennzeichnet, daß die Flüssigkeiten stetig der Trennkammer zugeführt und stetig aus der Trennkammer abgeführt werden.

3. Verfahren nach Anspruch 1, dadurch gekennzeichnet, daß wenigstens eine der Flüssigkeiten stationär in der Trennkammer verbleibt, wobei diese sowohl die stoffabgebende als auch die stoffaufnehmende Flüssigkeit sein kann.

4. Verfahren nach Anspruch 1, dadurch gekennzeichnet, daß die Flüssigkeiten diskontinuierlich der Trennkammer zugeführt werden und nach Abschluß der Stofftrennung diskontinuierlich aus der Trennkammer abgezogen werden.

5. Verfahren nach Anspruch 2, dadurch gekennzeichnet, daß die Flüssigkeiten im Gleichstrom zueinander die Trennkammer durchströmen.

6. Verfahren nach Anspruch 2, dadurch gekennzeichnet, daß die Flüssigkeiten im Gegenstrom zueinander die Trennkammer durchströmen.

7. Verfahren nach einem der Ansprüche 1 bis 6, dadurch gekennzeichnet, daß die beteiligten und insbesondere die stoffaufnehmenden Flüssigkeiten unterschiedliche pH-Werte haben.

8. Verfahren nach einem der Ansprüche 1 bis 7, dadurch gekennzeichnet, daß der Stoff in der stoffaufnehmenden Flüssigkeit durch Überschreiten der Löslichkeitsgrenze auskristallisiert wird.

9. Verfahren nach einem der Ansprüche 1 bis 8, dadurch gekennzeichnet, daß die Stofftransportrichtung durch Umpolen der Elektroden einmal oder mehrmals umgekehrt wird.

10. Verfahren nach einem der Ansprüche 1 bis 9, dadurch gekennzeichnet, daß während der Stofftrennung, insbesondere vor dem Umpolen der Elektroden, der pH-Wert einer oder mehrerer Flüssigkeiten durch Zugabe einer Lauge oder einer Säure geändert wird.

11. Verfahren nach einem der Ansprüche 1 bis 10, dadurch gekennzeichnet, daß von den wenigstens zwei Flüssigkeiten wenigstens eine in Form eines überwiegend aus einer Grundsubstanz, vorzugsweise Wasser, und geringen Anteilen einer oder mehrerer Beimischungssubstanzen bestehenden Stoffgemischs verwendet wird.

12. Verfahren nach Anspruch 11, dadurch gekennzeichnet, daß als Beimischungssubstanzen Polyethoxylate verwendet werden, bei denen die Zahl der Ethylenoxidgruppen pro Molekül zwischen 3 und 20 liegt und der Substituent ein aliphatischer, arylaromatischer oder Fettsäurerest ist.

13. Vorrichtung zur Durchführung des Verfahrens nach einem der Ansprüche 1 bis 12 mit wenigstens einer Trennkammer (1), die wenigstens zwei an eine Gleichstromquelle anschließbare Elektroden (5, 6) enthält, dadurch gekennzeichnet, daß die Elektroden (5, 6) in unterschiedlichen, nicht voll miteinander mischbaren Flüssigkeiten (2, 3, 16) beiderseits der Phasengrenze (4) hiervon angeordnet sind.

14. Vorrichtung nach Anspruch 13, dadurch gekennzeichnet, daß die Elektroden (5, 6) in Bezug zur Länge der Trennkammer (1) in einem geringen Abstand, vorzugsweise 5 bis 20 mm, zueinander angeordnet sind.

15. Vorrichtung nach Anspruch 13 oder 14, dadurch gekennzeichnet, daß die untere Elektrode (5) aus einer Quecksilberschicht (20) besteht, während die obere Elektrode (6) entweder fest mit der Trennkammer (1) verbunden oder mittels nichtleitender Distanzelemente (22) auf der Quecksilberschicht (20) schwimmend eingebaut ist.

16. Vorrichtung nach einem der Ansprüche 13 bis 15, dadurch gekennzeichnet, daß wenigstens eine der beteiligten flüssigen Phasen (2, 3, 16) in einem Trägermedium, insbesondere einem porösen Festkörper (18), fixiert ist.

17. Vorrichtung nach einem der Ansprüche 13 bis 16, dadurch gekennzeichnet, daß eine Vielzahl von Trennkammern (1) übereinander angeordnet ist, die über Schächte (13) miteinander verbunden sind.

18. Vorrichtung nach Anspruch 16, dadurch gekennzeichnet, daß zwischen den übereinanderliegenden Trennkammern (1) an einer oder an mehreren Stellen zusätzliche Kühlelemente (15) angeordnet sind.

Fig.1

Fig. 2

EP 0 320 709 A1

EP 0 320 709 A1

**Fig. 3**

**Fig. 4**

Fig. 5

Fig. 6

Europäisches
Patentamt

**EUROPÄISCHER RECHERCHENBERICHT**

Nummer der Anmeldung

EP 88 12 0106

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 221 242 (S. NEES) <br> * Figuren 1,2; Ansprüche 1,2,8,10,20; Seite 7, Zeilen 7-20 * | 1,2,5, 11,13, 16 | B 01 D 57/02 <br> G 01 N 27/26 |
| Y | | 7 | |
| | --- | | |
| X | FR-A-1 320 290 (TECHNICON INSTRUMENTS CORP.) <br> * Figur 1; Zusammenfassung 1,2e,f,3; Seite 6, Spalte 1, Zeilen 40-42 * | 1,3,4, 11,13, 14 | |
| A | | 2 | |
| | --- | | |
| A | ELECTROCHIMICA ACTA, Band 24, 1979, Seiten 293-300, Pergamon Press ltd, Oxford, GB; J. KORYTA: "Electrochemical polarization phenomena at the interface of two immiscible electrolyte solutions" <br> * Zusammenfassung; Figur 6 * | 1,3,13, 14 | |
| | --- | | |
| A | US-A-3 697 406 (P.J. SVENDSEN) <br> * Figuren 5,6; Zusammenfassung; Spalte 3, Zeile 72 - Spalte 4, Zeile 28 * | 1,2,11, 13 | RECHERCHIERTE SACHGEBIETE (Int. Cl.4) |
| | --- | | |
| A | US-A-3 413 208 (W.F. BARG, Jr.) <br> * Figur 2; Ansprüche 1,2,4; Spalte 3, Zeilen 48-63; Beispiel 4 * | 1,2,5, 11,13, 14 | B 01 D <br> G 01 N |
| | --- | | |
| A | GB-A-1 150 722 (NAT. RESAERCH DEV. CORP.) <br> * Seite 1, Zeilen 22-39; Seite 3, Zeilen 21-30,77-83; Seite 5, Zeilen 96-116; Figuren 1,4 * | 1,2,5, 13,14 | |
| | ---        -/- | | |

Der vorliegende Recherchenbericht wurde für alle Patentansprüche erstellt

| Recherchenort | Abschlußdatum der Recherche | Prüfer |
|---|---|---|
| DEN HAAG | 01-02-1989 | HOORNAERT P.G.R.J. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 791 050 (W.B. ALLINGTON) * Figuren 1,2; Zusammenfassung; Spalte 2, Zeilen 41-62; Spalte 11, Zeile 47 - Spalte 12, Zeile 23; Ansprüche 1,2 * --- | 1,3,7, 13,16 | |
| Y | ARCHIVES OF BIOCHEMISTRY AND BIOPHYSICS, Suppl. 1, 1962, Seiten 132-138; H. SVENSSON: "Isoelectric fractionation, analysis, and characterization of ampholytes in natural pH gradients. III. Description of apparatus for electrolysis in columns stabilized by density gradients and direct determination of isoelectric points" * Zusammenfassung; Seite 132: "Introduction" * --- | 7 | |
| A | CHEMICAL ABSTRACTS, Band 90, Nr. 11, 12. März 1979, Seite 207, Nr. 82582m, Columbus, Ohio, US; C.M. BALLARD et al.: "Cell surface charge. Correlation of partition with electrophoresis", & BIOCHIM. BIOPHYS. ACTA 1979, 582(1), 102-6 * Zusammenfassung * ----- | 1,11,12 | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 01-02-1989 | HOORNAERT P.G.R.J. |